# EUROPÄISCHE PATENTSCHRIFT

(11) **EP 4 592 223 B1**
(45) Veröffentlichungstag und Bekanntmachung des Hinweises auf die Patenterteilung: **11.11.2026**
(21) Anmeldenummer: 25153370.9
(22) Anmeldetag: 22.01.2025
(51) Int. Cl.: B65G 47/57, B65G 57/112, B65G 57/32, B65G 47/51

(54) **VORRICHTUNG UND VERFAHREN ZUM STAPELN VON LEBENSMITTEL-PORTIONEN, INSBESONDERE PATTIES**
DEVICE AND METHOD FOR STACKING PORTIONS OF FOOD, IN PARTICULAR PATTIES
DISPOSITIF ET PROCÉDÉ D'EMPILAGE DE PORTIONS DE PRODUITS ALIMENTAIRES, EN PARTICULIER DE PATIES

(30) Priorität: 23.01.2024 DE 102024101917
(43) Veröffentlichungstag der Anmeldung: 30.07.2025
(73) Patentinhaber: VEMAG Maschinenbau GmbH, 27283 Verden/Aller (DE)
(72) Erfinder: Heimsoth, Andreas, 29664 Walsrode (DE); Warnke, Achim, 28857 Syke (DE); Wagner, Harald, 27283 Verden (DE)
(74) Vertreter: Eisenführ Speiser

(56) Entgegenhaltungen:
- WO-A1-98/24718
- WO-A2-2007/021763
- DE-A1- 3 638 538
- DE-A1- 3 708 604
- FR-A1- 2 789 666
- US-A1- 2006 182 613
- BITTLER M H ET AL: "VERTICAL BUFFER IN AN AUTOMATED ASSEMBLY LINE", IBM TECHNICAL DISCLOSURE BULLETIN,, vol. 26, no. 8, 1 January 1984 (1984-01-01), pages 4393 - 4395, XP001408008

## Beschreibung

Die Erfindung betritt eine Vorrichtung nach dem Oberbegriff des Anspruchs 1 und ein Verfahren nach dem Oberbegriff des Anspruchs 9 zum Stapeln von Lebensmittel-Portionen, insbesondere Patties.

In der Lebensmittelindustrie besteht ein Bedarf, Vorrichtungen und Verfahren der eingangs genannten Art bereitzustellen, mit denen portionierte Produkte wie z.B. Patties für Burger, Cevapcici oder auch Teig- oder Käseprodukte in Portionen bereitzustellen. Häufig sollen einzelne Portionen, wie Burger-Patties, in einem Stapel aus mehreren Portionen bereitgestellt werden. Bei derartigen Anwendungen ist es oft notwendig, die einzelnen Portionen auf einem Substrat wie einem Stück Papier oder einer Folie oder dergleichen bereitzustellen und dann zu stapeln. Zu diesen Zwecken kommen die eingangs genannten Vorrichtungen zum Einsatz.

Ein Beispiel einer derartigen Vorrichtung ist die Maschine der VEMAG Maschinenbau GmbH mit der Kurzbezeichnung PI355 in Kombination mit einer nachgeschalteten Stapelmaschine. Die Maschine PI355 wird auch als Papiereinleger bezeichnet, da einzelne Portionen wie Patties auf einem Zuführ-Förderband auf einem Stück Papier oder Folie bereitgestellt werden. Zur Erzeugung eines Stapels ist dieser Maschine ein Vertikal-Förderer nachgeordnet, welcher mindestens eine in vertikaler Richtung verfahrbare Plattform aufweist, auf welcher mehrere Portionen nacheinander übereinander abgelegt werden können, um einen Stapel aus Portionen zu bilden. Ist ein Stapel mit einer gewünschten Zahl von Portionen gebildet, kann dieser von dem Vertikal-Förderer mittels eines nachgeordneten Abführ-Förderbandes oder dergleichen abtransportiert werden, um beispielsweise den Stapel weiter zu verpacken.

EP 1 996 468 offenbart ein Verfahren und eine Vorrichtung zum Stapeln von Gegenständen, die mittels eines horizontalen Förderbandes zugeführt und in eine vertikale Transportvorrichtung eingesetzt werden. US 4,577,453 offenbart ebenfalls eine Vorrichtung zum Stapeln von flachen Artikeln. WO 2007/021763 offenbart einen Stapler (Stacker) zum insbesondere mittels Papier oder Folie getrennte Lebensmittel-Portionen. An einem Förderband sind verfahrbare Plattformen für die Stapel gebildet.

Aus FR 2 789 666 A1 ist eine Vorrichtung, gemäß dem Oberbegriff des Anspruchs 1, zum Bilden von Stapeln übereinanderliegender Produkte bekannt. Die Vorrichtung umfasst einen Einlaufförderer zum Zuführen der Produkte, eine Stapeleinrichtung zum Stapeln der mittels des Einlaufförderers zugeführten Produkte. Das stromabwärtige Endes des Einlaufförderers wird auf die Höhenposition des Staplers beim Übergeben der Produkte angepasst, wobei das Ende des Einlaufförderers angehoben wird, während der Vertikalförderer nicht bewegt wird.

Bekannte Vorrichtungen und Verfahren weisen den Nachteil auf, dass die Portionen und insbesondere aus mehreren Portionen gebildete Stapel aus einer Höhe auf ein Abführ-Förderband abgegeben, gewissermaßen abgeworfen werden, was die Qualität negativ beeinflussen kann. Die Patties können dadurch in ihrer Form oder ihrem Zusammenhalt beschädigt werden. Auch laufen die Förder- und Stapelverfahren teilweise diskontinuierlich oder intermittierend, was sich nachteilig auf die Geschwindigkeit des Prozesses auswirken kann.

Aufgabe der Erfindung ist es, eine Vorrichtung bzw. ein Verfahren zum Stapeln von Portionen aus Lebensmittel-Masse, insbesondere Patties, anzugeben, welche die Nachteile des Standes der Technik vermeiden und insbesondere so ausgebildet sind, dass die Qualität der Portionen und insbesondere der Stapel verbessert sind, insbesondere auch Beschädigungen der Portionen im Stapel vermieden werden und die Geschwindigkeit bei der Bereitstellung der Stapel erhöht ist.

Die Erfindung löst die Aufgabe gemäß eines ersten Aspektes bei einer Vorrichtung der eingangs genannten Art dadurch, dass das Zuführ-Förderband so gelagert und das Zuführ-Förderband und der Vertikal-Förderer mittels der Steuerung derart angetrieben werden, dass das dem Vertikal-Förderer zugewandte, in seiner Höhe vertikal verfahrbare Ende des Förderbandes während der Förderung der Portionen, in einer kontinuierlichen oder im Wesentlichen kontinuierlichen Bewegung synchronisiert angetrieben werden (Anspruch 1).

Dadurch, dass gemäß dieses Aspektes der Erfindung das dem Vertikal-Förderer zugewandte Ende des Zuführ-Förderbandes während der Förderung und damit Bildung eines Stapels in seiner Höhe vertikal sowohl abwärts als auch aufwärts verfahrbar ist, können die einzelnen Portionen mit keiner oder einer ggf. sehr geringen Fallhöhe sehr gezielt auf einer unteren Portion bzw. einem bereits teilweise gebildeten Stapel abgelegt werden. Durch die vertikale Verfahrbarkeit des Endes des Förderbandes kann während einer Abwärts-Bewegung des bereits gebildeten Stapels, welcher mittels des Vertikal-Förderers abwärts bewegt wird, das Ende des Zuführ-Förderbandes der Abwärts-Bewegung des Stapels angepasst, gewissermaßen insoweit nachgeführt werden. So kann eine Portion sukzessive sanft und mit hoher Geschwindigkeit oben auf den zu bildenden Stapel abgelegt werden. Ist ein Stapel mit einer gewünschten Zahl von Portionen fertig gebildet, kann das Ende des vorzugsweise verschwenkbar gelagerten Zuführ-Förderbandes vorzugsweise mit einer relativ hohen Geschwindigkeit aufwärtsbewegt werden, um auf dem Vertikal-Förderer auf einer Plattform des Vertikal-Förderers rasch weitere Portionen aufeinander ablegen zu können, um einen weiteren Stapel zu bilden. Dadurch wird vorteilhaft erreicht, dass die Portionen, insbesondere Patties, keine Beschädigungen in der Form erleiden, da sie sanfter abgelegt werden können. Gleichzeitig kann rasch nacheinander ein nächster Stapel gebildet werden. Insbesondere wird die Vorrichtung gekoppelt mit einem so genannten Papiereinleger, beispielsweise einer Maschine der VEMAG Maschinenbau GmbH mit der Bezeichnung PI355.

Bevorzugt ist die Vorrichtung so gesteuert bzw. wird das erfindungsgemäße Verfahren so ausgeführt, dass die Geschwindigkeit des Endes des Zuführ-Förderbandes in Abhängigkeit von der Geschwindigkeit des Vertikal-Förderers abwärts, also der Geschwindigkeit der Plattform abwärts, eingestellt wird. Vorzugsweise ist die Geschwindigkeit des Endes des Zuführ-Förderbandes geringer als die Geschwindigkeit des Vertikal-Förderers abwärts. Beispielsweise kann die Geschwindigkeit des Endes des Zuführ-Förderbandes halb so groß sein oder auch gleich, es sind aber auch andere Abhängigkeiten erfindungsgemäß möglich und praktikabel.

Gemäß der Erfindung ist die Steuerung derart ausgebildet und eingerichtet, dass Antriebe des Zuführ-Förderbandes, des Vertikal-Förderers so angesteuert werden können, dass diese in einer im Wesentlichen kontinuierlichen oder weitgehend kontinuierlichen oder auch intermittierenden Bewegung quasi-kontinuierlich angetrieben werden können, sodass die Antriebe aufeinander abgestimmt oder synchronisiert angesteuert werden, können mehrere Portionen sukzessive insbesondere zu einem Stapel aus mehreren Portionen sanft und mit hoher Geschwindigkeit ausgebildet werden, insbesondere auch gemäß des zuvor beschriebenen ersten Aspektes der Erfindung. Mittels der Vorrichtung lässt sich ein kontinuierlicher oder quasi-kontinuierlicher, sanfter Bewegungsprozess realisieren. Die Fallhöhen für die Portionen und Stapel lassen sich sehr gering halten, was die Qualität des Stapels positiv beeinflusst. Gleichzeitig lassen sich hohe Prozessgeschwindigkeiten verwirklichen. Außerdem hat die Vorrichtung ein geringen "Fußabdruck", das heißt geringen Platzbedarf. Die Antriebe werden in einer kontinuierlichen Bewegung angetrieben, das heißt also das Zuführ-Förderband, der Antrieb für das vertikale Bewegen des Endes des Zuführ-Förderbandes und der Antrieb für den Vertikal-Förderer ggf. auch der Antrieb für ein Abführ-Förderband zum Abtransportieren eines gebildeten Stapels.

Gemäß einer Weiterbildung der Erfindung ist ein Abführ-Förderband vorgesehen, das benachbart von dem Vertikal-Förderer angeordnet ist, auf welches Portionen von dem Vertikal-Förderer abgegeben werden können, und dass die Plattform des Vertikal-Förderers und das Abführ-Förderband so relativ zu einander angeordnet sind, dass Portionen direkt von der Plattform auf das Abführ-Förderband abgegeben werden können.

Die Portionen und ein gebildeter Stapel sanft können direkt von einer Plattform des Vertikal-Förderers auf ein Abführ-Förderband ohne Fallhöhe und dennoch mit möglichst hoher Geschwindigkeit abgegeben werden. Dieser Aspekt der Erfindung ist insbesondere auch erfindungsgemäß kombinierbar mit den beiden zuvor beschriebenen ersten und zweiten Aspekten der Erfindung.

Gemäß einer bevorzugten Ausführungsform wird vorgeschlagen dass, die Plattform mindestens zwei separate Plattformabschnitte aufweist, zwischen denen wenigstens temporär ein Spalt ausgebildet ist, und dass das Abführ-Förderband einen Förderband-Abschnitt aufweist, der so dimensioniert ist, dass er mindestens teilweise innerhalb des Spaltes angeordnet ist, um Portionen von dem Vertikal-Förderer aufnehmen zu können . Zwischen den zwei Plattformabschnitten, die zusammen die Plattform bilden, ist ein Spalt ausgebildet. Ist der Stapel fertig, wird die Plattform so weit nach unten gefahren, dass der Förderband-Abschnitt des Abführ-Förderbandes genau in den Spalt hineinragt, und der Stapel wird so auf diesem Abschnitt sanft abgelegt. Anschließend wird der gesamte Stapel dann weiter abtransportiert. Auf gleiche Weise werden eine Vielzahl von Stapeln nacheinander erzeugt und transportiert.

Besonders bevorzugt weist der Vertikal-Förderer zwei umlaufenden Antriebselemente auf, an denen die Plattformabschnitte jeweils angeordnet und synchron antreibbar sind, um eine Plattform zum Aufnehmen von Portionen und vertikal abwärts Transportieren der Portionen zur Übergabe auf das Abführ-Förderband auszubilden. Zwei beabstandete umlaufende Antriebselemente, insbesondere flache Bänder oder Ketten, weisen jeweils mehrere beabstandete Plattformabschnitte auf, die mittels der zwei umlaufenden Antriebselemente gegenüberliegend und auf im Wesentlichen gleicher Höhe positioniert werden können und eine Platform bilden, um dann bereit zu sein zur Aufnahme von Portionen, die zur Bildung eines Stapels aufeinander abgelegt werden. Während dessen kann der Stapel mittels des Vertikal-Förderers durch Antreiben der umlaufenden Antriebselemente abwärts bewegt werden, während gleichzeitig Portionen mittels des Zuführ-Förderbandes jeweils von oben auf den Stapel abgelegt werden. Die Antriebselemente können jeweils einen eigenen Antrieb aufweisen oder einen gemeinsamen Antrieb, der mittels eines geeigneten Getriebes beide Antriebselemente antreiben kann.

Besonders bevorzugt ist es, dass das Zuführ-Förderband als Papierunterleger mit einer Einrichtung zum Zuführen von Papier derart ausgebildet ist, dass unter einer auf dem Zuführ-Förderband liegender Portion ein Stück Papier oder anderes Substrat angeordnet werden kann. Der Begriff Papierunterleger ist so zu verstehen, dass insbesondere Papier, aber auch ein Stück Folie oder auch ein Behälter ein anderes Substrat eine Unterlage bildet, auf der eine Portion positioniert werden kann. So kann insbesondere ein Stapel gebildet werden, ohne dass die einzelnen Portionen miteinander verkleben (Anspruch 6). Gemäß einer Weiterbildung wird vorgeschlagen, dass das Abführ-Förderband einen vorzugsweise zentralen Förderband-Abschnitt und zwei vorzugsweise seitlich dazu angeordnete Förderband-Abschnitte aufweist, die parallel zueinander angeordnet und synchron in eine Förderrichtung antreibbar sind. Insbesondere der zentrale Förderband-Abschnitt ist ausgebildet, um in den Schlitz oder Spalt eingeführt zu werden (Anspruch 7). Zu diesem Zweck wird gemäß der bevorzugten Weiterbildung vorgeschlagen, dass der vorzugsweise zentrale Förderband-Abschnitt länger ausgebildet ist als die vorzugsweise seitlich angeordneten Förderband-Abschnitte, und dass der zentrale Förderband-Abschnitt in den Spalt der Plattform hineinragt, wobei im Betrieb bei sich abwärts bewegender Plattform ein Stapel aus mehreren Portionen zunächst auf dem zentralen Förderband-Abschnitt abgelegt und dann anschließend zusätzlich durch die seitlich angeordneten Förderband-Abschnitte in Förderrichtung transportiert werden kann (Anspruch 8).

Gemäß einer weiteren alternativen und bevorzugten Ausführungsform wird vorgeschlagen, dass eine Steuerung so ausgebildet ist, dass ein Antrieb für das Zuführ-Förderband, ein Antrieb des Vertikal-Förderers, ein weiterer Antrieb zum Bewegen des Endes des Zuführ-Förderbandes und ein Antrieb des Vertikal-Förderers und optional ein Antrieb des Abführ-Förderbandes aufeinander abgestimmt angesteuert werden können. Die Steuerung kann eine eigene Steuerung der Vorrichtung sein (Anspruch 1), oder auch die Steuerung einer vorgelagerten oder nachgelagerten Maschine, beispielsweise eine Maschine des Typs Papiereinleger PI355 der VEMAG Maschinenbau GmbH (Anspruch 9).

Bei einer bevorzugten Weiterbildung der Vorrichtung ist ein Produkt-Anschlag 38 im Bereich des Vertikal-Förderers angeordnet derart, dass von dem Zuführ-Förderband auf eine Plattform für den zu bildenden Stapel abgegebene Portionen dort an dem Anschlag auf einer Plattform zur Anlage kommen können. Der Produkt-Anschlag 38 bewirkt in vorteilhafter Weise, dass die Bewegung der abgegebenen Portionen in Fördererrichtung des Zuführ-Förderbandes unterbrochen wird, dass also die abgeworfene Portion sicher auf der Plattform bzw. oben auf dem Stapel positioniert wird, dass die Portionen also insgesamt auf einem Stapel ausgerichtet werden. Der Produkt-Anschlag 38 ist vorzugsweise an einem Rahmenabschnitt des Vertikal-Förderers angeordnet, vorzugsweise ortsfest positioniert. Der Produkt-Anschlag 38 ist vorzugsweise an die Form der Portionen angepasst; so kann der Produkt-Anschlag 38 beispielsweise an seiner den Portionen zugewandten Oberfläche konkav ausgebildet sein, beispielsweise auch mit einer partiellen Halbkreisform, um insoweit angepasst zu sein an eine im Wesentlichen runde Form eines Pattys. Es sind aber auch andere Formen des Anschlags möglich. Vorzugsweise ist der Produkt-Anschlag auch verstellbar an einem Rahmen Abschnitt des Vertikal-Förderers montiert, also insbesondere in verschiedenen vertikalen Positionen oder auch verschiedenen Positionen in horizontaler Richtung. Vorzugsweise kann das Material des Produkt-Anschlags auch elastisch verformbar oder weich ausgebildet sein, um insoweit eine gewisse Dämpfungsfunktion zu haben bzw. die Bewegung der Portionen gegen den Produkt- Anschlag etwas sanfter gebremst wird. Auch kann der Produkt-Anschlag vorzugsweise auswechselbar als Wechselteil ausgebildet sein.

Gemäß einem Verfahrens-Aspektes wird bei einem Verfahren der eingangs genannten Art die Aufgabe dadurch gelöst, dass das Zuführ-Förderband so gelagert ist und angetrieben wird, dass während der Förderung der Portionen das Ende des Zuführ-Förderbandes vertikal abwärts bewegt wird, während Portionen sukzessive auf einer Plattform des Vertikal-Förderers zur Bildung eines Stapels abgelegt werden (Anspruch 9).

Hinsichtlich der erfindungsgemäß erreichten Vorteile wird auf die obigen Beschreibungen zu dem ersten Vorrichtungsaspekt der Erfindung vollumfänglich verwiesen.

Gemäß einer bevorzugten Weiterbildung des Verfahrens ist vorgesehen, dass das Zuführ-Förderband und der Vertikal-Förderer mittels mindestens einer Steuerung derart angetrieben werden, dass das Förderband zum Fördern in Förderrichtung und der Vertikal-Förderer und das Ende des Zuführ-Förderbandes synchronisiert d. h. aufeinander abgestimmt, angetrieben werden, besonders bevorzugt in einer kontinuierlichen oder im Wesentlichen kontinuierlichen Bewegung angetrieben werden.

Weitere vorteilhafte Ausführungsformen des Verfahrens sind in den weiteren Unteransprüchen angegeben. Hinsichtlich deren Vorteile wird vollumfänglich auf die obigen Beschreibungen und Vorteile der Vorrichtung Bezug genommen, die entsprechend auf die bevorzugten Verfahren analog zutreffen, sowie auf die nachfolgenden Beschreibungen der bevorzugten Ausführungsbeispiele. Insbesondere lassen sich mit den erfindungsgemäßen Verfahren sanft ohne Qualitätsverluste der Portionen und mit vorzugsweise kontinuierlichen oder quasi-kontinuierlichen Bewegungen mit hoher Geschwindigkeit Stapel aus einzelnen Portionen herstellen.

Die Erfindung ist nachstehend anhand von Ausführungsbeispielen der Vorrichtung und der Verfahren beschrieben. Es zeigen:
- Fig. 1: eine Vorrichtung und ein Verfahren zum Stapeln von Portionen in einer perspektivischen Ansicht einlaufseitig;
- Fig. 2: die Vorrichtung und das Verfahren in einer perspektivischen Ansicht auslaufseitig;
- Fig. 3: eine Seitenschnittdarstellung der Vorrichtung;
- Fig. 4: eine Seitenansicht der Vorrichtung in verschiedenen Betriebszuständen des Zuführ-Förderbandes;
- Fig. 5: eine perspektivische Ansicht gemäß Fig. 4;
- Fig. 6: eine Draufsicht auf die Vorrichtung;
- Fig. 7: eine entsprechende Seitenansicht zu Fig. 6;
- Fig. 8: eine stirnseitige, auslaufseitige Ansicht des Vertikal-Förderers und des Abführ-Förderbandes; und
- Fig. 9: eine Steuerung und schematisch eine Vielzahl von Antrieben für verschiedene Komponenten der Vorrichtung.

Die Vorrichtung 1 und das mittels dieser ausführbare Verfahren zum Stapeln S von Portionen P aus Lebensmittel-Masse, insbesondere Patties sind nachfolgenden beschrieben.

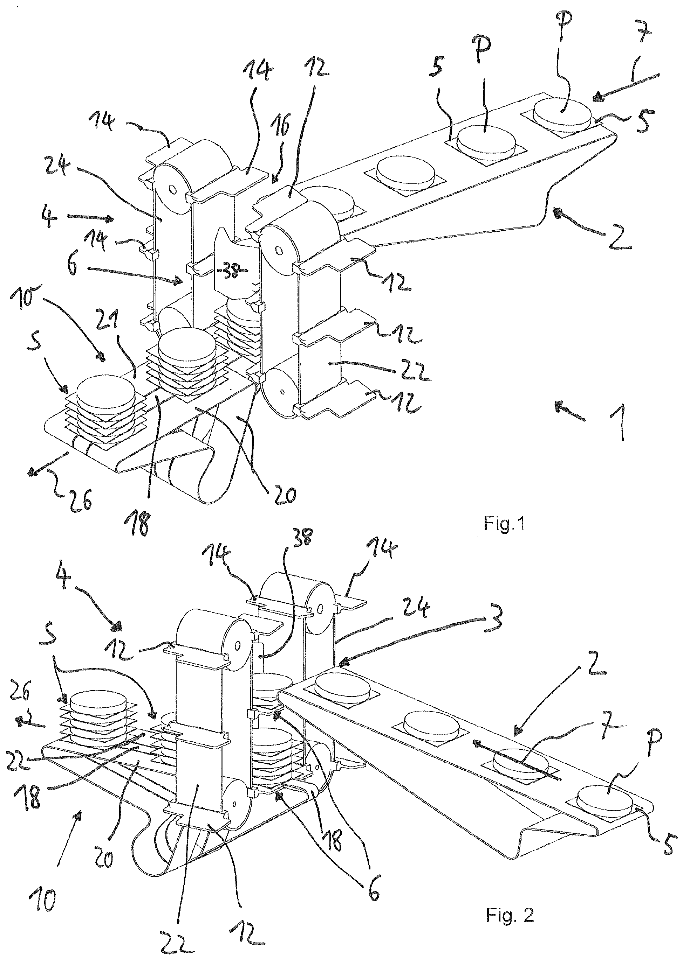

Wie Figuren 1 - 8 veranschaulichen, weist die Vorrichtung 1 ein Zuführ-Förderband 2 zum Zuführen der Portionen P in eine Förderrichtung 7 und Abgeben der Portionen P an einem Ende des Zuführ-Förderbandes 2 sowie einen stromabwärts von dem Zuführ-Förderband 2 angeordneten Vertikal-Förderer 4 zum Fördern der Portionen in im Wesentlichen vertikaler Richtung sowie ein benachbart von dem Vertikal-Förderer 4 angeordnetes Abführ-Förderband 10 auf, auf welches Portionen P von dem Vertikal-Förderer 4 abgegeben werden können.

Die wesentlichen Bestandteile der Vorrichtung 1 sind an einem nicht näher gezeigten typischen Maschinen-Gestell oder mehreren Gestellen montiert. Das Zuführ-Förderband 2 ist in an sich bekannter Weise in einer Ausführungsform-Variante Teil eines sogenannten Papiereinlegers und an dessen Maschinen-Gestell montiert, beispielsweise des Papiereinlegers des Typs PI355 der Vemag Maschinenbau GmbH. In einer alternativen Ausführungsform ist das Zuführ-Förderband 2 an dem gleichen Maschinengestell gelagert, an dem auch der Vertikal-Förderer 4 gelagert ist.

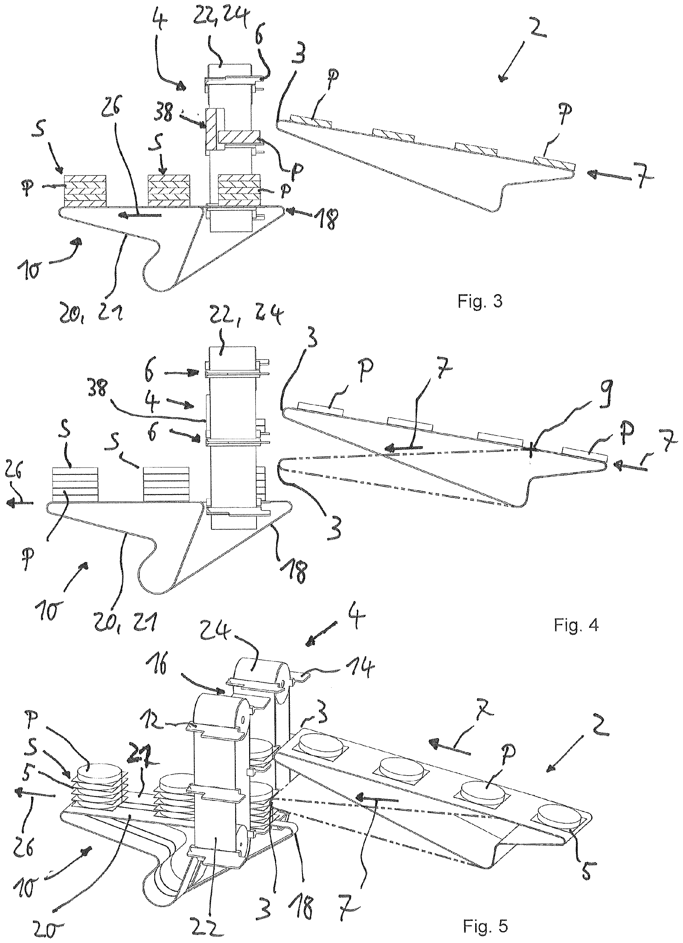

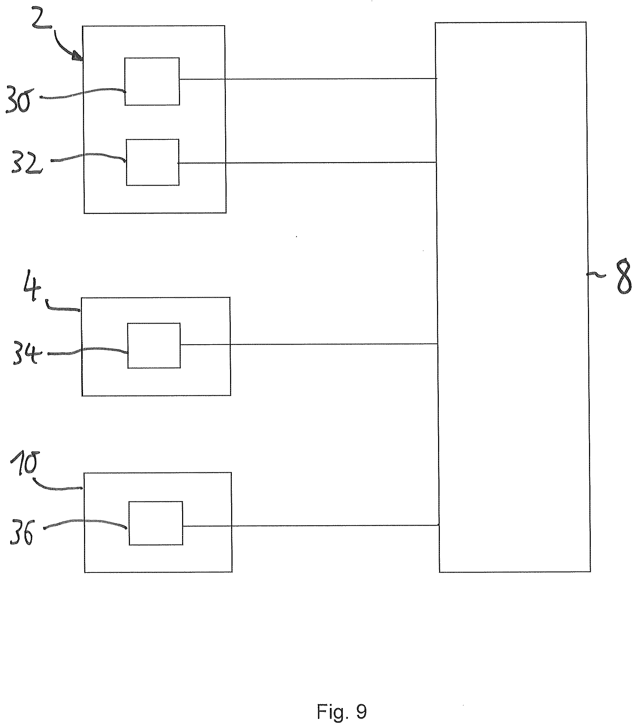

Das Zuführ-Förderband 2 hat in an sich bekannter Weise ein umlaufendes Band ist erfindungsgemäß so gelagert und antreibbar, dass das dem Vertikal-Förderer 4 zugewandte Ende 3 des Förderbandes 2 während der Förderung der Portionen P kontinuierlich oder intermittierend in seiner Höhe vertikal verfahrbar ist. Zu diesem Zweck ist das Förderband 2 in etwa an einem in Fig. 4 schematisch gezeigten, an sich bekannten Drehgelenk 9 verschwenkbar so gelagert, dass das Ende 3 in verschiedene Positionen auf bzw. ab bewegt war oder verfahrbar ist, wie insbesondere die Figuren 4 und 5 veranschaulichen. Zu diesem Zweck ist ein Antrieb 32 zum Bewegen des Endes 3 des Zuführ-Förderbandes 2 vorgesehen, der mittels einer Steuerung 8 angesteuert werden kann, vergleiche Figur 9 und die diesbezügliche Beschreibung unten, der die Schwenkbewegung zum im Wesentlichen vertikalen Bewegen des Endes 3 bewirkt. Der Antrieb 32 kann ein Servomotor sein, der mittels eines Getriebes mit dem Förderband 2 gekoppelt ist, oder alternativ auch ein Pneumatikzylinder.

Das Zuführ-Förderband 2 ist im Ausführungsbeispiel als Papierunterleger vorzugsweise als Maschine des Typs PI355 der VEMAG Maschinenbau GmbH mit einer Einrichtung zum Zuführen von Papier derart ausgebildet, dass unter einer auf dem Zuführ-Förderband 2 liegenden Portion P ein Stück Papier, eine Folie oder anderes Substrat 5 oder auch Behälter zur Aufnahme von Portionen P angeordnet werden kann.

Wie die Figuren 2-7 gut veranschaulichen, weist der Vertikal-Förderer 4 mehrere Plattformen 6 zur Aufnahme mehrerer einen Stapel S bildender Portionen P auf, welche zum Aufnehmen von Portionen stromabwärts des Zuführ-Förderbands 2 ausgebildet sind. Die im Normalbetrieb nach unten einen Stapel S aufnehmenden Plattformen 6 des Vertikal-Förderers und das Abführ-Förderband 10 sind ausgangsseitig so relativ zu einander angeordnet, dass Portionen P direkt von der Plattform 6 auf das Abführ-Förderband 10 abgegeben werden können.

Auch mit Bezug auf Figur 9 werden im Betrieb das Zuführ-Förderband 2 und der Vertikal-Förderer 4 mittels mindestens der Steuerung 8 derart angetrieben, dass das Förderband 2 zum Fördern in Förderrichtung 7 und der Vertikal-Förderer 4 und das Ende des Zuführ-Förderbandes 2 synchronisiert angetrieben werden, besonders bevorzugt in einer kontinuierlichen oder im Wesentlichen kontinuierlichen Bewegung angetrieben werden.

Wie die Figuren 1-8 zeigen, wird die effektive Plattform 6 zum Aufnehmen von Portionen durch mindestens zwei separate, miteinander kooperierende Plattformabschnitte 12, 14 gebildet. Tatsächlich kooperieren im gezeigten Ausführungsbeispiel insgesamt sechs Paare aus Plattformabschnitten 12,14. Die Zahl kann variieren und hängt ab von der Zahl der Portionen P, die einen Stapel S bilden. Die Plattformabschnitte 12, 14 sind gleichmäßig beabstandet jeweils an einem umlaufenden Antriebselement 22, 24 angeordnet, welches jeweils als Band, Riemen, Kette oder dergleichen ausgebildet ist. Die umlaufenden Antriebselemente 22, 24 und damit auch die Plattformabschnitte 12, 14 sind synchron mittels eines Antriebs 34 antreibbar (siehe Figur 9), um jeweils für einen Stapel S eine Plattform 6 zum Aufnehmen von Portionen und vertikal abwärts Transportieren der Portionen und des Stapels S zur Übergabe auf das Abführ-Förderband 10 auszubilden.

Wie insbesondere die Figuren 1, 2 sowie 6 und 8 veranschaulichen, ist zwischen den Plattformabschnitten 12, 14 wenigstens temporär ein Spalt 16 ausgebildet, der so bemessen ist mit Blick auf die Dimension der Portionen P, dass diese und der sich bildende Stapel S nicht durch den Spalt 16 hindurch fallen, sondern von der gebildeten Plattform 6 getragen werden.

Wie insbesondere Figuren 1, 2, 5 und 8 veranschaulichen, ist das Abführ-Förderband 10 mit einem Förderband-Abschnitt 18 ausgebildet, der so dimensioniert ist, dass er mindestens teilweise innerhalb des Spaltes 16 angeordnet ist, um Portionen P und insbesondere einen gebildeten Stapel S von dem Vertikal-Förderer 4 aufnehmen zu können. Dies geschieht dann, wenn der Stapel S soweit von dem Vertikal-Förderer 4 vertikal abwärts bewegt wurde, dass die Unterseite der unteren Portion P des Stapels S mit der Oberseite des Förderband-Abschnitts 18 in Kontakt kommt und dieser die Last des Stapels S trägt, während die beiden Plattformabschnitte 12, 14 weiter vertikal nach unten bewegt werden und nicht mehr gebraucht werden zum Tragen des Stapels S und dann weiter umlaufend weitertransportiert werden mithilfe der umlaufenden Antriebselemente 22, 24, bis sie gemeinsam wieder oben eine neue Plattform 6 ausbilden durch gegenüberliegende Anordnung. Im Ausführungsbeispiel der Vorrichtung 1 hat das Abführ-Förderband 10 einen zentralen Förderband-Abschnitt 12 und zwei seitlich dazu angeordnete Förderband-Abschnitte 20, 21, die parallel zueinander angeordnet und synchron in eine Förderrichtung 26 antreibbar sind, um den Stapel S in Förderrrichtung 26 weiter transportieren zu können.

Wie Figuren 1-8 zeigen, ist der zentrale Förderband-Abschnitt 18 länger ausgebildet als die seitlich angeordneten Förderband-Abschnitte 20, 21, derart, dass der zentrale Förderband-Abschnitt 18 in den Spalt 16 der Plattform 6 zwischen die Plattformabschnitte 12, 14 hineinragt. Im Betrieb wird bei sich abwärts bewegender Plattform 6 ein Stapel S aus mehreren Portionen P zunächst auf dem zentralen Förderband-Abschnitt 18 abgelegt und dann anschließend zusätzlich durch die seitlich angeordneten Förderband-Abschnitte 20, 21 in Förderrichtung 26 wesentlichen horizontal weiter transportiert.

Die in Figur 9 schematisch gezeigte übliche elektronische Maschinen-Steuerung 8 ist mit Speichern, Prozessoren und Schnittstellen zur Bedienung und zur Signalübertragung so ausgebildet, dass ein Antrieb 30 für das Zuführ-Förderband, ein Antrieb 32 des Vertikal-Förderers 4, ein weiterer Antrieb 34 zum Bewegen des Endes 3 des Zuführ-Förderbandes 2 und ein Antrieb 34 des Vertikal-Förderers 4 und ein Antrieb 36 des Abführ-Förderbandes 10 aufeinander abgestimmt angesteuert werden können. Die in Figur 9 gezeigten Linien für den Komponenten symbolisieren entsprechende Leitungen zur Übertragung von Signalen, insbesondere Steuersignalen, die vorzugsweise von der Steuerung 8 abgegeben werden. Auch können in umgekehrter Richtung Signale zu der Steuerung 8 übertragen werden, die beispielsweise die Stellung eines Antriebs repräsentieren.

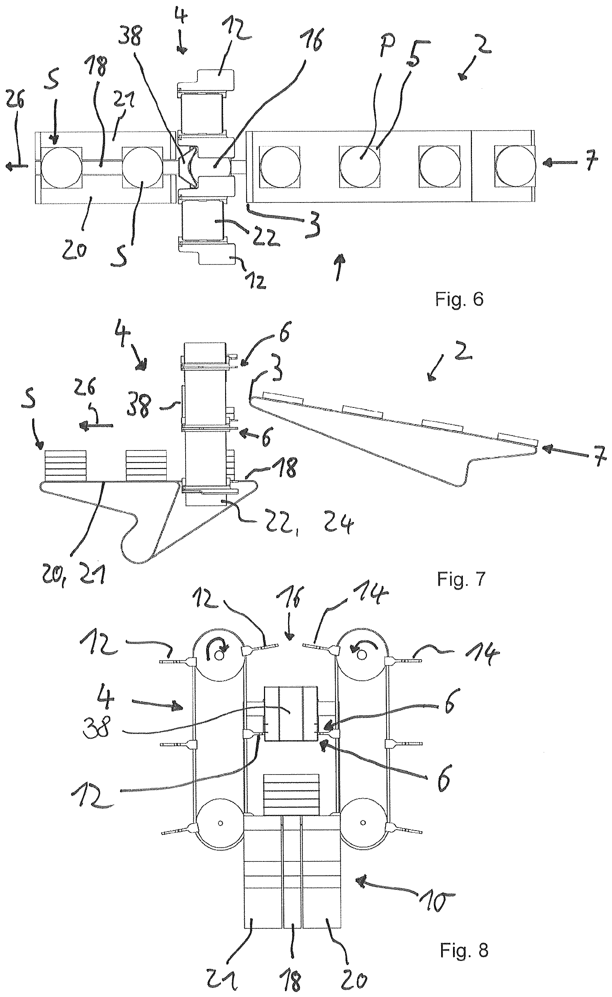

An der Vorrichtung 1 ist ein Produkt-Anschlag 38 im Bereich des Vertikal-Förderers angeordnet, wie beispielsweise den Figuren 1, 3,6 und 8 gut entnehmbar ist, und zwar derart angeordnet, dass von dem Zuführ-Förderband 2 auf eine Plattform 6 für den zu bildenden Stapel S abgegebene Portionen P dort an dem Anschlag 38 auf einer Plattform 6 zur Anlage kommen können. Der Produkt-Anschlag 38 bewirkt in vorteilhafter Weise, dass die Bewegung der abgegebenen Portionen P in Fördererrichtung 7 des Zuführ-Förderbandes 2 unterbrochen wird, dass also die abgeworfene Portionen P sicher auf der Plattform bzw. oben auf dem Stapel positioniert wird. Der Produkt-Anschlag 38 ist vorzugsweise an einem nicht näher gezeigten Rahmenabschnitt des Vertikal-Förderers 4 angeordnet, vorzugsweise ortsfest positioniert Der Produkt-Anschlag 38 ist vorzugsweise an die Form der Portionen angepasst; so kann der Produkt-Anschlag 38 wie besonders gut Figur 6 entnehmbar ist, beispielsweise an seiner den Portionen zugewandten Oberfläche konkav ausgebildet sein, beispielsweise auch mit einer partiellen Halbkreisform, um insoweit angepasst zu sein an eine im Wesentlichen runde Form eines Pattys. Es sind aber auch andere Formen des Anschlags möglich. Vorzugsweise ist der Produkt-Anschlag 38 auch verstellbar an einem Rahmenabschnitt des Vertikal-Förderers montierbar, also insbesondere in verschiedenen vertikalen Positionen oder auch verschiedenen Positionen in horizontaler Richtung. Vorzugsweise kann das Material des Produkt-Anschlags 38 elastisch verformbar oder weich ausgebildet sein, um insoweit eine gewisse Dämpfungsfunktion zu haben bzw. die Bewegung der Portionen gegen den Produkt-Anschlag etwas sanfter gebremst wird. Auch kann der Produkt-Anschlag 38 vorzugsweise auswechselbar als Wechselteil ausgebildet sein.

Nachfolgend sind weitere Details der Vorrichtung 1 und des Verfahrens beschrieben.

Bei der Anwendung der Vorrichtung und Ausführung der Verfahren ist dafür Sorge getragen, dass das Zuführ-Förderband 2 so gelagert ist und angetrieben wird, dass während der Förderung das Ende 3 des Förderbandes 2 vertikal abwärts bewegt wird, Portionen P sukzessive auf der Plattform 6 des Vertikal-Förderers 4 zur Bildung eines Stapels S abgelegt werden. Das Zuführ-Förderband 2 und der Vertikal-Förderer 4 werden mittels der Steuerung 8 derart angetrieben, dass das Förderband 2 zum Fördern in Förderrichtung 7 und der Vertikal-Förderer 4 und das Ende des Zuführ-Förderbandes 2 synchronisiert angetrieben werden, besonders bevorzugt in einer kontinuierlichen oder im Wesentlichen kontinuierlichen Bewegung angetrieben werden. Die durch die kooperierenden Plattformabschnitte 12, 14 temporär ausgebildete Plattform 6 des Vertikal-Förderers zur Aufnahme eines Stapels S und das Abführ-Förderband 10 sind so angeordnet und die Antriebe 30, 32, 34, 36 werden so angesteuert, dass jeweils ein Stapel S aus Portionen P sukzessive direkt von der Plattform 6 auf das Abführ-Förderband 10 abgegeben wird, sodass eine Vielzahl von Stapeln S gebildet werden.

Im Betrieb wird mithilfe der Steuerung 8 erreicht, dass, während Portionen P in Förderrichtung 7 des Zuführ-Förderbandes 2 gefördert werden, das Ende 3 des Zuführ-Förderbandes 3 in einer Phase vertikal abwärts dem Vertikal-Förderer 4 in seiner Abwärtsbewegung folgt, um einen Stapel S auf einer Plattform 6 zu bilden, und in einer weiteren Phase dann aufwärts bewegt wird entgegen der Abwärtsbewegung des Vertikal-Förderers 4, und dann in einer weiteren Phase zur Bildung eines nachfolgenden Stapels S wieder abwärts bewegt wird auf die zuvor beschriebene Weise. Ein gebildeter Stapel S aus Portionen P wird von der Plattform direkt auf den Förderband-Abschnitt 18 des Abführ-Bandes 10 abgelegt, und der abgelegte Stapel S wird anschließend von dem Abführ-Förderband 10 auch mithilfe der weiteren Förderband-Abschnitte 20, 21 in die Abführ-Förderrichtung 26 weiter transportiert.

### Bezugszeichenliste

- 1: Vorrichtung
- 2: Zuführ-Förderband
- P: Portionen
- S: Stapel
- 3: Ende des Zuführ-Förderbandes
- 4: Vertikal-Förderer
- 5: Substrat
- 6: Plattform
- 7: Förderrichtung des Zuführ-Förderbandes
- 8: Steuerung
- 9: Drehgelenk
- 10: Abführ-Förderband
- 12: Plattformabschnitt
- 14: Plattformabschnitt
- 16: Spalt
- 18: zentraler Förderband-Abschnitt
- 20: seitlicher Förderband-Abschnitt
- 21: seitlicher Förderband-Abschnitt
- 22: Antriebselement des Vertikal-Förderers
- 24: Antriebselement des Vertikal-Förderers
- 26: Förderrichtung des Abführ-Förderbandes
- 30: Antrieb für das Zuführ-Förderband
- 32: Antrieb zum Bewegen des Endes des Zuführ-Förderbandes
- 34: Antrieb für den Vertikal-Förderer
- 36: Antrieb für das Abführ-Förderband
- 38: Produkt-Anschlag

## Patentansprüche

1. Vorrichtung (1) zum Stapeln von Portionen (P) aus Lebensmittel-Masse, insbesondere Patties, mit
- einem Zuführ-Förderband (2) zum Zuführen der Portionen (P) in eine Förderrichtung (7) und Abgeben der Portionen (P) an einem Ende des Zuführ-Förderbandes (2),
- einem stromabwärts von dem Zuführ-Förderband (2) angeordneten Vertikal-Förderer (4) zum Fördern der Portionen in im Wesentlichen vertikaler Richtung, welcher mindestens eine im Wesentlichen vertikal verfahrbare Plattform (6) zum Aufnehmen von Portionen stromabwärts des Zuführ-Förderbands (2) aufweist, und
- mindestens einer Steuerung (8),
wobei der Vertikal-Förderer (4) so ausgebildet ist, dass mindestens eine Portion (P) und insbesondere mehrere gestapelte Portionen in einem Stapel (S) von der Plattform (6) zum Weitertransport abgegeben werden können,
**dadurch gekennzeichnet, dass**
das Zuführ-Förderband (2) so gelagert und das Zuführ-Förderband (2) und der Vertikal-Förderer (4) mittels der Steuerung (8) derart angetrieben werden, dass das Zuführ-Förderband (2) zum Fördern in Förderrichtung (7) und der Vertikal-Förderer (4) und das dem Vertikal-Förderer (4) zugewandte, in seiner Höhe vertikal verfahrbare Ende (3) des Zuführ-Förderbandes (2) während der Förderung der Portionen (P) in einer kontinuierlichen oder im Wesentlichen kontinuierlichen Bewegung synchronisiert angetrieben werden.

2. Vorrichtung nach Anspruch 1,
**gekennzeichnet durch** ein Abführ-Förderband (10) das benachbart zu dem Vertikal-Förderer (4) angeordnet ist und auf welches Portionen (P) von dem Vertikal-Förderer (4) abgegeben werden können,
und dass die Plattform (6) des Vertikal-Förderers und das Abführ-Förderband (10) so relativ zu einander angeordnet sind, dass Portionen (P) direkt von der Plattform (6) auf das Abführ-Förderband (10) abgegeben werden können.

3. Vorrichtung nach Anspruchs 2,
**dadurch gekennzeichnet, dass** die Plattform (6) mindestens zwei separate Plattformabschnitte (12, 14) aufweist, zwischen denen wenigstens temporär ein Spalt (16) ausgebildet ist,
und dass das Abführ-Förderband (10) einen Förderband-Abschnitt (18) aufweist, der so dimensioniert ist, dass er mindestens teilweise innerhalb des Spaltes (16) angeordnet ist, um Portionen von dem Vertikal-Förderer (4) aufnehmen zu können.

4. Vorrichtung nach mindestens einem der vorstehenden Ansprüche,
**dadurch gekennzeichnet, dass** der Vertikal-Förderer (4) zwei umlaufenden Antriebselemente (22, 24) aufweist, an denen die Plattformabschnitte (12, 14) jeweils angeordnet und synchron antreibbar sind, um eine Plattform (6) zum Aufnehmen von Portionen und vertikal abwärts Transportieren der Portionen zur Übergabe auf das Abführ-Förderband (10) auszubilden.

5. Vorrichtung nach mindestens einem der vorstehenden Ansprüche,
**dadurch gekennzeichnet, dass** das Zuführ-Förderband (2) als Papierunterleger mit einer Einrichtung zum Zuführen von Papier derart ausgebildet ist, dass unter einer auf dem Zuführ-Förderband (2) liegender Portion (P) ein Stück Papier oder anderes Substrat (5) angeordnet werden kann.

6. Vorrichtung nach mindestens einem der vorstehenden Ansprüche,
**dadurch gekennzeichnet, dass** das Abführ-Förderband (10) einen zentralen Förderband-Abschnitt (18) und zwei seitlich dazu angeordnete Förderband-Abschnitte (20, 21) aufweist, die parallel zueinander angeordnet und synchron in eine Förderrichtung (26) antreibbar sind.

7. Vorrichtung nach Anspruch 6,
**dadurch gekennzeichnet, dass** der zentrale Förderband-Abschnitt (18) länger ausgebildet ist als die seitlich angeordneten Förderband-Abschnitte (20, 21), und dass der zentrale Förderband-Abschnitt (18) in den Spalt (16) der Plattform (6) hineinragt, wobei im Betrieb bei sich abwärts bewegender Plattform (6) ein Stapel (S) aus mehreren Portionen (P) zunächst auf dem zentralen Förderband-Abschnitt (18) abgelegt und dann anschließend zusätzlich durch die seitlich angeordneten Förderband-Abschnitte (20, 21) in Förderrichtung (26) transportiert werden kann.

8. Vorrichtung nach mindestens einem der vorstehenden Ansprüche,
**dadurch gekennzeichnet, dass** die Steuerung (8) so ausgebildet ist, dass ein Antrieb (30) für das Zuführ-Förderband, ein Antrieb (32) des Vertikal-Förderers (4), ein weiterer Antrieb (34) zum Bewegen des Endes (3) des Zuführ-Förderbandes (2) und ein Antrieb (34) des Vertikal-Förderers (4) und optional ein Antrieb (36) des Abführ-Förderbandes (10) aufeinander abgestimmt angesteuert werden können.

9. Verfahren zum Stapeln von Portionen aus Lebensmittel-Masse, insbesondere Patties, bei dem Portionen mittels eines Zuführ-Förderbandes (2) in eine Förderrichtung (7) zugeführt werden können,
die Portionen (P) an einem Ende (3) des Zuführ-Förderbandes (2) abgegeben werden können auf einen Vertikal-Förderer (4),
mehrere Portionen nacheinander von dem Zuführ-Förderband (2) auf eine im Wesentlichen vertikal bewegbare Plattform (6) des Vertikal-Förderers (4) abgelegt werden können,
**dadurch gekennzeichnet, dass** das Zuführ-Förderband (2) so gelagert ist und angetrieben wird, dass während der Förderung der Portionen (P) das Ende (3) des Zuführ-Förderbandes (2) vertikal abwärts bewegt wird, während Portionen (P) sukzessive auf einer Plattform (6) des Vertikal-Förderers (4) zur Bildung eines Stapels (S) abgelegt werden.

10. Verfahren nach Anspruch 9,
**dadurch gekennzeichnet, dass** das Zuführ-Förderband (2) und der Vertikal-Förderer (4) mittels mindestens einer Steuerung (8) derart angetrieben werden, dass das Förderband (2) zum Fördern in Förderrichtung (7) und der Vertikal-Förderer (4) und das Ende des Zuführ-Förderbandes (2) synchronisiert angetrieben werden, besonders bevorzugt in einer kontinuierlichen oder im Wesentlichen kontinuierlichen Bewegung angetrieben werden.

11. Verfahren nach einem der vorstehenden Ansprüche,
**dadurch gekennzeichnet, dass** benachbart von dem Vertikal-Förderer (4) ein Abführ-Förderband (10) angeordnet ist, auf welches Portionen (P) von dem Vertikal-Förderer (4) abgegeben werden,
und dass die Plattform (6) des Vertikal-Förderers und das Abführ-Förderband (10) so relativ zu einander angeordnet sind, dass ein Stapel (S) aus Portionen (P) direkt von der Plattform (6) auf das Abführ-Förderband (10) abgegeben wird.

12. Verfahren nach einem der vorstehenden Ansprüche,
**dadurch gekennzeichnet, dass**, während Portionen (P) in Förderrichtung (7) des Zuführ-Förderbandes (2) gefordert werden, das Ende (3) des Zuführ-Förderbandes (3) in einer Phase vertikal abwärts dem Vertikal-Förderer (4) in seiner Abwärtsbewegung folgt, um einen Stapel (S) zu bilden, und in einer weiteren Phase dann aufwärts bewegt wird entgegen der Abwärtsbewegung des Vertikal- Förderers (4) und dann in einer weiteren Phase zur Bildung eines nachfolgenden Stapels (S) wieder abwärts bewegt wird.

13. Verfahren nach einem der vorstehenden Ansprüche,
**dadurch gekennzeichnet, dass** die Plattform (6) mindestens zwei separate Plattformabschnitte (12, 14) aufweist, zwischen denen wenigstens temporär ein Spalt (16) ausgebildet ist,
und dass das Abführ-Förderband (10) einen zentralen Förderband-Abschnitt (18) aufweist, der so dimensioniert ist, dass er mindestens teilweise innerhalb des Spaltes (16) angeordnet ist, um Portionen von dem Vertikal-Förderer (4) aufnehmen zu können,
und dass ein gebildeter Stapel (S) aus Portionen (P) von der Plattform direkt auf mindestens einen Förderband-Abschnitt (18) des Abführ-Bandes (10) abgelegt wird,
und der abgelegte Stapel (S) anschließend von dem Abführ-Förderband (10) in eine Abführ-Förderrichtung (26) weiter transportiert wird.

14. Verfahren nach Anspruch 13,
**dadurch gekennzeichnet, dass** der Stapel (S) zunächst auf dem zentralen Förderband-Abschnitt (18) abgelegt wird und dann zusätzlich von zwei weiteren seitlichen Förderband-Abschnitten (20, 21) weiter in Abführ-Förderrichtung (26) transportiert wird.

## Claims

1. An apparatus (1) for stacking portions (P) made of food mass, in particular patties, comprising
- a feeder conveyor belt (2) for feeding the portions (P) in a conveying direction (7) and for dispensing the portions (P) at one end of the feeder conveyor belt (2),
- a vertical conveyor (4) arranged downstream from the feeder conveyor belt (2), for conveying the portions in a substantially vertical direction and having at least one substantially vertically movable platform (6) for receiving portions downstream from the feeder conveyor belt (2), and
- at least one controller (8),
wherein the vertical conveyor (4) is so designed that at least one portion (P) and in particular a plurality of stacked portions in a stack (S) can be dispensed from the platform (6) for further transport,
**characterized in that**
the feeder conveyor belt (2) is so mounted and the feeder conveyor belt (2) and the vertical conveyor (4) are driven by means of the controller (8) in such a way that the conveyor belt (2) for conveying in the conveying direction (7) and the vertical conveyor (4) and the end (3) of the conveyor belt (2) facing the vertical conveyor (4), which can be moved vertically in height, are driven in a continuous or substantially continuous movement while the portions (P) are being conveyed.

2. The apparatus according to claim 1,
**characterized by** an outfeed conveyor belt (10) onto which portions (P) can be dispensed from the vertical conveyor (4) and which is arranged adjacent the vertical conveyor (4), and that the platform (6) of the vertical conveyor and the outfeed conveyor belt (10) are arranged relative to each other in such a way that portions (P) can be dispensed directly from the platform (6) onto the outfeed conveyor belt (10).

3. The apparatus according to claim 2,
**characterized in that** the platform (6) has at least two separate platform sections (12, 14) between which a gap (16) is formed at least temporarily,
and that the outfeed conveyor belt (10) has a conveyor belt section (18) which is dimensioned such that it is arranged at least partially inside the gap (16) so as to be able to receive portions from the vertical conveyor (4).

4. The apparatus according to at least one of the preceding claims,
**characterized in that** the vertical conveyor (4) has two circulating drive member (22, 24), on which the platform sections (12, 14) are respectively arranged and can be driven synchronously to form a platform (6) for receiving portions and for transporting the portions vertically downwards for transfer to the outfeed conveyor belt (10).

5. The apparatus according to at least one of the preceding claims,
**characterized in that** the feeder conveyor belt (2) is designed as a paper interleaver having a device for feeding paper in such a way that a piece of paper or other substrate (5) can be arranged underneath a portion (P) lying on the feeder conveyor belt (2).

6. The apparatus according to at least one of the preceding claims,
**characterized in that** the outfeed conveyor belt (10) has a central conveyor belt section (18) and two conveyor belt sections (20, 21) arranged lateral thereto, which are arranged parallel to each other and can be driven synchronously in a conveying direction (26).

7. The device according to claim 6,
**characterized in that** the central conveyor belt section (18) is longer than the conveyor belt sections (20, 21) arranged lateral thereto, and that the central conveyor belt section (18) protrudes into the gap (16) in the platform (6), wherein in operation, when the platform (6) is moving downwards, a stack (S) comprising a plurality of portions (P) is initially placed on the central conveyor belt section (18) and can then be subsequently conveyed additionally in the conveying direction (26) by the laterally arranged conveyor belt sections (20, 21).

8. The apparatus according to at least one of the preceding claims,
**characterized in that** the controller (8) is configured in such a way that a drive means (30) for the feeder conveyor belt, a drive means (32) of the vertical conveyor (4), a further drive means (34) for moving the end (3) of the feeder conveyor belt (2) and a drive means (34) of the vertical conveyor (4) and optionally a drive means (36) of the outfeed conveyor belt (10) can be controlled in a coordinated manner.

9. A method for stacking portions made of food mass, in particular patties, in which portions can be fed in a conveying direction (7) by means of a feeder conveyor belt (2), the portions (P) can be dispensed at one end (3) of the feeder conveyor belt (2) onto a vertical conveyor (4), and
a plurality of portions can be placed one after the other from the feeder conveyor belt (2) onto a substantially vertically movable platform (6) of the vertical conveyor (4),
**characterized in that** the feeder conveyor belt (2) is mounted and driven in such a way that, during conveying of the portions (P), the end (3) of the feeder conveyor belt (2) is moved vertically downwards while portions (P) are placed successively on a platform (6) of the vertical conveyor (4) to form a stack (S).

10. The method according to claim 9,
**characterized in that** the feeder conveyor belt (2) and the vertical conveyor (4) are driven by means of at least one controller (8) in such a way that the conveyor belt (2) for conveying in the conveying direction (7) and the vertical conveyor (4) and the end of the feeder conveyor belt (2) are driven in synchrony, particularly preferably in a continuous or substantially continuous movement.

11. The method according to any one of the preceding claims,
**characterized in that** an outfeed conveyor belt (10) onto which portions (P) are dispensed from the vertical conveyor (4) is arranged adjacent the vertical conveyor (4),
and that the platform (6) of the vertical conveyor and the outfeed conveyor belt (10) are arranged in such a way relative to each other that a stack (S) of portions (P) is dispensed directly from the platform (6) onto the outfeed conveyor belt (10).

12. The method according to any one of the preceding claims,
**characterized in that**, while portions (P) are being conveyed in the conveying direction (7) of the feeder conveyor belt (2), the end (3) of the feeder conveyor belt (3) follows the vertical conveyor (4) vertically downwards in its vertically downward movement, in one phase, to form a stack (S), and in another phase it is then moved upwards in the opposite direction to the downward movement of the vertical conveyor(4) and is then moved further downwards, in yet another phase, to form a successive stack (S).

13. The method according to any one of the preceding claims,
**characterized in that** the platform (6) has at least two separate platform sections (12, 14) between which a gap (16) is formed at least temporarily,
and that the outfeed conveyor belt (10) has a central conveyor belt section (18) which is dimensioned such that it is arranged at least partially inside the gap (16) so as to be able to receive portions from the vertical conveyor (4),
and that a stack (S) of portions (P) is placed directly from the platform onto at least one conveyor belt section (18) of the outfeed belt (10),
and the deposited stack (S) is subsequently conveyed further by the outfeed conveyor belt (10) in an outfeed conveying direction (26).

14. The method according to claim 13,
**characterized in that** the stack (S) is initially placed on the central conveyor belt section (18) and is then conveyed additionally and further by two further lateral conveyor belt sections (20, 21) in the outfeed conveying direction (26).

## Revendications

1. Dispositif (1) d'empilage de portions (P) de préparation alimentaire, notamment de steaks hachés, avec
- une bande convoyeuse d'alimentation (2) pour amener les portions (P) dans une direction de convoyage (7) et distribuer les portions (P) à une extrémité de la bande convoyeuse d'alimentation (2),
- un convoyeur vertical (4) disposé en aval de la bande convoyeuse d'alimentation (2) pour convoyer les portions dans une direction sensiblement verticale, qui présente au moins une plateforme (6) mobile sensiblement verticalement pour recevoir des portions en aval de la bande convoyeuse d'alimentation (2), et
- au moins une commande (8),
dans lequel le convoyeur vertical (4) est réalisé de sorte qu'au moins une portion (P) et en particulier plusieurs portions empilées en une pile (S) peuvent être distribuées à partir de la plateforme (6) pour continuer d'être transportées,
**caractérisé en ce que**
la bande convoyeuse d'alimentation (2) est montée et la bande convoyeuse d'alimentation (2) et le convoyeur vertical (4) sont entraînés au moyen de la commande (8) de sorte que la bande convoyeuse d'alimentation (2) pour le convoyage dans la direction de convoyage (7) et le convoyeur vertical (4) et l'extrémité (3) de la bande convoyeuse d'alimentation (2) orientée vers le convoyeur vertical (4), mobile verticalement à sa hauteur, sont entraînés de manière synchronisée pendant le convoyage des portions (P) dans un mouvement continu ou sensiblement continu.

2. Dispositif selon la revendication 1,
**caractérisé par** une bande convoyeuse de sortie (10) qui est disposée à proximité du convoyeur vertical (4) et sur laquelle des portions (P) peuvent être distribuées par le convoyeur vertical (4),
et que la plateforme (6) du convoyeur vertical et la bande convoyeuse de sortie (10) sont disposées l'une par rapport à l'autre de sorte que les portions (P) peuvent être distribuées directement à partir de la plateforme (6) sur la bande convoyeuse de sortie (10).

3. Dispositif selon la revendication 2,
**caractérisé en ce que** la plateforme (6) présente au moins deux sections de plateforme (12, 14) distinctes entre lesquelles une fente (16) est réalisée au moins temporairement,
et que la bande convoyeuse de sortie (10) présente une section de bande convoyeuse (18) qui est dimensionnée de sorte qu'elle est disposée au moins partiellement à l'intérieur de la fente (16) pour pouvoir recevoir des portions du convoyeur vertical (4).

4. Dispositif selon au moins l'une quelconque des revendications précédentes,
**caractérisé en ce que** le convoyeur vertical (4) présente deux éléments d'entraînement (22, 24) circulaires sur lesquels les sections de plateforme (12, 14) sont respectivement disposées et peuvent être entraînées de manière synchrone pour réaliser une plateforme (6) pour la réception de portions et le transport vertical vers le bas des portions à transférer sur la bande convoyeuse de sortie (10).

5. Dispositif selon au moins l'une quelconque des revendications précédentes,
**caractérisé en ce que** la bande convoyeuse d'alimentation (2) est réalisée en tant que support de papier avec un équipement pour amener du papier de sorte qu'un morceau de papier ou un autre substrat (5) peut être disposé sous une portion (P) se trouvant sur la bande convoyeuse d'alimentation (2).

6. Dispositif selon au moins l'une quelconque des revendications précédentes,
**caractérisé en ce que** la bande convoyeuse de sortie (10) présente une section centrale de bande convoyeuse (18) et deux sections de bande convoyeuse (20, 21) disposées latéralement par rapport à celle-ci, qui sont disposées parallèlement l'une à l'autre et peuvent être entraînées de manière synchrone dans une direction de convoyage (26).

7. Dispositif selon la revendication 6,
**caractérisé en ce que** la section centrale de bande convoyeuse (18) est réalisée de manière plus longue que les sections de bande convoyeuse (20, 21) disposées latéralement, et que la section centrale de bande convoyeuse (18) fait saillie dans la fente (16) de la plateforme (6), dans lequel, pendant le fonctionnement, lorsque la plateforme (6) se déplace vers le bas, une pile (S) de plusieurs portions (P) peut d'abord être déposée sur la section centrale de bande convoyeuse (18) puis en plus transportée par les sections de bande convoyeuse (20, 21) disposées latéralement dans la direction de convoyage (26).

8. Dispositif selon au moins l'une quelconque des revendications précédentes,
**caractérisé en ce que** la commande (8) est réalisée de sorte qu'un entraînement (30) pour la bande convoyeuse d'alimentation, un entraînement (32) du convoyeur vertical (4), un autre entraînement (34) pour déplacer l'extrémité (3) de la bande convoyeuse d'alimentation (2) et un entraînement (34) du convoyeur vertical (4) et facultativement un entraînement (36) de la bande convoyeuse de sortie (10) peuvent être commandés de manière coordonnée les uns avec les autres.

9. Procédé d'empilage de portions de pâte alimentaire, en particulier de steaks hachés, selon lequel les portions peuvent être amenées dans une direction de convoyage (7) au moyen d'une bande convoyeuse d'alimentation (2),
les portions (P) à une extrémité (3) de la bande convoyeuse d'alimentation (2) peuvent être distribuées sur un convoyeur vertical (4),
plusieurs portions peuvent être déposées successivement à partir de la bande convoyeuse d'alimentation (2) sur une plateforme (6) pouvant être déplacée sensiblement verticalement du convoyeur vertical (4),
**caractérisé en ce que** la bande convoyeuse d'alimentation (2) est montée et entraînée de sorte que, pendant le convoyage des portions (P), l'extrémité (3) de la bande convoyeuse d'alimentation (2) est déplacée verticalement vers le bas, tandis que les portions (P) sont déposées successivement sur une plateforme (6) du convoyeur vertical (4) pour former une pile (S).

10. Procédé selon la revendication 9,
**caractérisé en ce que** la bande convoyeuse d'alimentation (2) et le convoyeur vertical (4) sont entraînés au moyen d'au moins une commande (8) de sorte que la bande convoyeuse (2) pour le convoyage dans la direction de convoyage (7) et le convoyeur vertical (4) et l'extrémité de la bande convoyeuse d'alimentation (2) sont entraînés de manière synchronisée, particulièrement préférentiellement dans un mouvement continu ou sensiblement continu.

11. Procédé selon l'une quelconque des revendications précédentes, **caractérisé en ce qu'**une bande convoyeuse de sortie (10), sur laquelle les portions (P) sont distribuées par le convoyeur vertical (4), est disposée à proximité du convoyeur vertical (4),
et que la plateforme (6) du convoyeur vertical et la bande convoyeuse de sortie (10) sont disposées l'une par rapport à l'autre de sorte qu'une pile (S) de portions (P) est distribuée directement à partir de la plateforme (6) sur la bande convoyeuse de sortie (10).

12. Procédé selon l'une quelconque des revendications précédentes, **caractérisé en ce que**, pendant que des portions (P) sont convoyées dans la direction de convoyage (7) de la bande convoyeuse d'alimentation (2), l'extrémité (3) de la bande convoyeuse d'alimentation (3), dans une phase, suit verticalement vers le bas le convoyeur vertical (4) dans son mouvement descendant pour former une pile (S), et, dans une autre phase, est ensuite déplacée vers le haut à l'encontre du mouvement descendant du convoyeur vertical (4), puis, dans une autre phase, est de nouveau déplacée vers le bas pour former une pile (S) suivante.

13. Procédé selon l'une quelconque des revendications précédentes,
**caractérisé en ce que** la plateforme (6) présente au moins deux sections de plateforme (12, 14) distinctes entre lesquelles une fente (16) est réalisée au moins temporairement,
et que la bande convoyeuse de sortie (10) présente une section centrale de bande convoyeuse (18) qui est dimensionnée de sorte qu'elle est disposée au moins partiellement à l'intérieur de la fente (16) pour pouvoir recevoir des portions du convoyeur vertical (4),
et qu'une pile (S) de portions (P) formée est déposée directement à partir de la plateforme sur au moins une section de bande convoyeuse (18) de la bande convoyeuse de sortie (10),
et la pile (S) déposée continue ensuite d'être transportée par la bande convoyeuse de sortie (10) dans une direction de convoyage de sortie (26).

14. Procédé selon la revendication 13,
**caractérisé en ce que** la pile (S) est d'abord déposée sur la section centrale de bande convoyeuse (18), puis continue d'être transportée en plus par deux autres sections de bande convoyeuse latérales (20, 21) dans la direction de convoyage de sortie (26).
